(19) Europäisches Patentamt / European Patent Office / Office européen des brevets

(11) **EP 2 424 152 B1**

(12) **EUROPEAN PATENT SPECIFICATION**

(45) Date of publication and mention
of the grant of the patent:
**26.09.2018 Bulletin 2018/39**

(51) Int Cl.:
*H04L 1/18* (2006.01)          *H04L 1/00* (2006.01)
*H04L 1/20* (2006.01)          *H04W 24/10* (2009.01)
*H04W 28/18* (2009.01)

(21) Application number: **11190536.0**

(22) Date of filing: **17.01.2001**

(54) **Channel quality measurement in data transmission using hybrid ARQ**

KANAL-QUALITÄTSMESSUNG BEI DATENÜBERTRAGUNG MIT HYBRID ARQ

MESURE DE LA QUALITE DE VOIES DANS DES TRANSMISSIONS DE DONNEES UTILISANT DES ACCUSES DE RECEPTION

(84) Designated Contracting States:
**DE FR GB**

(43) Date of publication of application:
**29.02.2012 Bulletin 2012/09**

(62) Document number(s) of the earlier application(s) in accordance with Art. 76 EPC:
**01909644.5 / 1 258 095**

(73) Proprietor: **Panasonic Intellectual Property Corporation**
**of America**
**Torrance, CA 90503 (US)**

(72) Inventors:
• **Golitschek Edler Von Elbwart, Alexander**
**63225 Langen (DE)**
• **Seidel, Eiko**
**63225 Langen (DE)**

(74) Representative: **Grünecker Patent- und**
**Rechtsanwälte**
**PartG mbB**
**Leopoldstraße 4**
**80802 München (DE)**

(56) References cited:
**WO-A-00/72496        US-A- 5 425 051**
**US-A- 5 781 542**

• **BAKHTIYARI S ET AL: "PRACTICAL IMPLEMENTATION OF A MOBILE DATA LINK PROTOCOL WITH A TYPE II HYBRID ARQ SCHEME AND CODE COMBINING", PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, vol. CONF. 43, 18 May 1993 (1993-05-18), pages 774-777, XP000393297, ISBN: 0-7803-1267-8**
• **NANDA S ET AL: "ADAPTATION TECHNIQUES IN WIRELESS PACKET DATA SERVICES", IEEE COMMUNICATIONS MAGAZINE, IEEE SERVICE CENTER, PISCATAWAY, US, vol. 38, no. 1, 1 January 2000 (2000-01-01), pages 54-64, XP000908338, ISSN: 0163-6804, DOI: 10.1109/35.815453**
• **HAGENAUER J: "RATE-COMPATIBLE PUNCTURED CONVOLUTIONAL CODES (RCPC CODES) AND THEIR APPLICATIONS", IEEE TRANSACTIONS ON COMMUNICATIONS, IEEE SERVICE CENTER, PISCATAWAY, NJ. USA, vol. 36, no. 4, 1 April 1988 (1988-04-01), pages 389-400, XP000670428, ISSN: 0090-6778, DOI: 10.1109/26.2763**

**Description**

The invention relates to a hybrid ARQ technique for data transmission and in particular to a hybrid ARQ Type II/III method of operating a transmitter for transmitting a data unit on a radio channel in a communication system to a receiver. The invention further relates to a corresponding transmitter and communication system. The invention can be applied in mobile communication systems and is particularly applicable to cellular systems. In particular, the invention can be applied in the Universal Mobile Telecommunication System UMTS.

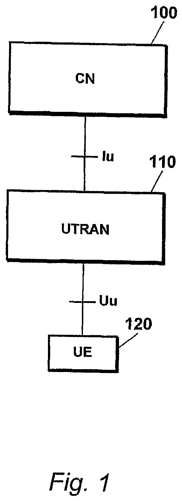

UMTS is one of the candidate technologies for next generation mobile communication systems, and its architecture is depicted in FIG. 1. UMTS is composed of a Core Network CN 100 which is connected with interface lu to the radio access network UTRAN 110 (UMTS Terrestrial Radio Access Network). The UTRAN 110 is on the other side connected to the User Equipment UE 120 with interface Uu.

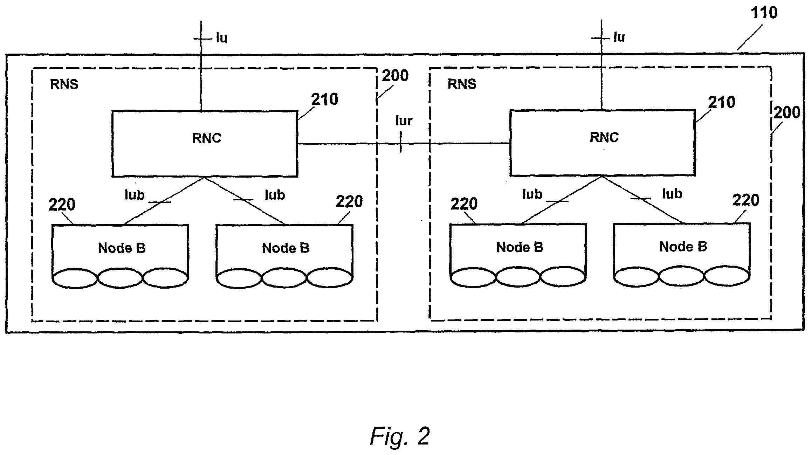

As can be seen from FIG. 2, the UTRAN 110 consists of a set of Radio Network Subsystems RNS 200 connected to the Core Network CN 100 through the interface lu. Each RNS 200 consists of a Radio Network Controller RNC 210 which is responsible for the Handover decisions that require signalling to the User Equipment UE 120. Further, the Radio Network Subsystems RNS 200 comprise base stations (Node Bs) 220 which are connected to the Radio Network Controller RNC 210 through an interface lub. Inside the UTRAN 110, the Radio Network Controllers RNC 210 of the Radio Networks Subsystems RNS 200 can be interconnected via a further interface lur. The interfaces lu and lur are logical interfaces. lur can be conveyed over a direct physical connection between the Radio Network Controllers RNC 210 or virtual networks using any suitable transport network.

The control plane signalling of Layer 3 between the User Equipment UE 120 and the UTRAN 110 is handled by the Radio Resource Control RRC layer. Besides others as conveying broadcast information, establishing radio bearer, controlling radio resources, the RRC is also responsible for User Equipment UE measurement reporting and control of the reporting. The measurements performed by the User Equipment UE 120 are controlled by the RRC layer in terms of what to measure, when to measure and how to report, including both UMTS air interface and other systems. The RRC layer also performs the reporting of the measurements from the User Equipment UE 120 to the network.

In data communications systems, error detection incorporated with Automatic Repeat reQuest (ARQ) is widely used for error control. The most common technique for error detection of non-real time services is based on hybrid ARQ schemes which are a combination of ARQ and Forward Error Correction (FEC).

FEC introduces redundancy into a block of information bits of length $k$ to form a coded block of length n, before transmission. The redundancy helps to combat errors at the receiver.

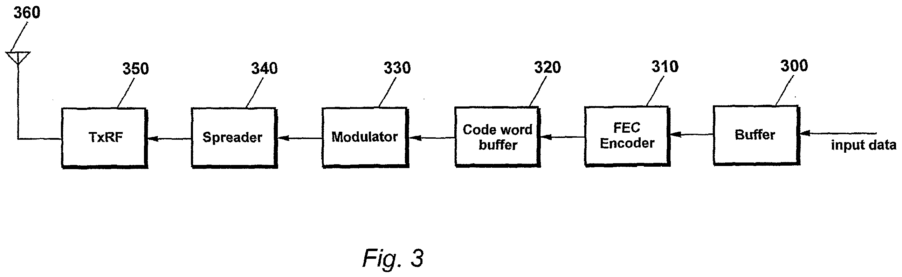

A transmitter which performs forward error correction is depicted in more detail in FIG. 3. The input data which are to be transmitted are first buffered in buffer 300. When there is data in the buffer 300 and the transmitter is assigned a physical channel for transmission, the data is encoded in the FEC encoder 310 thereby generating a mother code. The mother code or all the code words (code segments) of the mother code are then forwarded to the modulator 330 and the spreader 340 (in case of a Code Division Multiple Access CDMA system), shifted to the radio frequency RF by the RF circuit 350 and transmitted via the antenna 360. If Type II/III ARQ (described below) is used the transmitter further comprises a code word buffer 320 since different code words are sent in the retransmissions.

Turning now to the ARQ technique, the most frequently schemes used in mobile communications are the stop-and-wait (SAW) and selective-repeat (SR) continuous ARQ schemes. If an error is detected by Cyclic Redundancy Check (CRC), the receiver requests the transmitter to send additional bits. A retransmission unit of the Radio Link Control RLC layer is referred to as protocol data unit PDU.

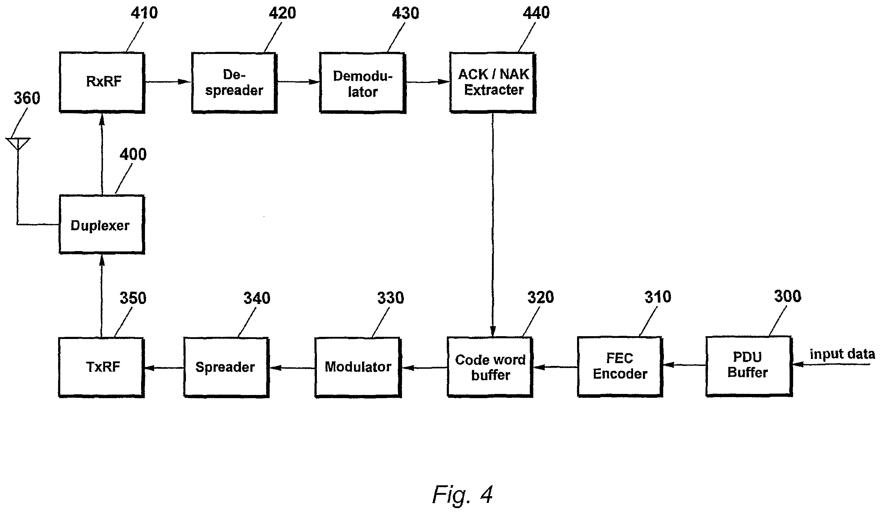

A transmitter arranged for being operated according to ARQ schemes is depicted in FIG. 4. Since the transmitter has to be able to receive requests from the receiver, the transmitter comprises a duplexer 400 which allows for using one antenna 360 for transmission and reception. When the transmitter receives a signal, it shifts the signal with the RF circuit 410 into the base band, despreads the signal in the despreader 420, forwards the despread signal to the demodulator 430, and extracts an ACK/NAK signal from the demodulated data. An ACK message informs the transmitter that the receiver was able to successfully decode the transmitted PDU. A NAK message informs the transmitter of a decoding error. Depending on whether the transmitter receives an ACK or a NAK, the ACK/NAK extractor 440 accesses the code word buffer 320 for retransmission purposes or will release the memory if an ACK has been received.

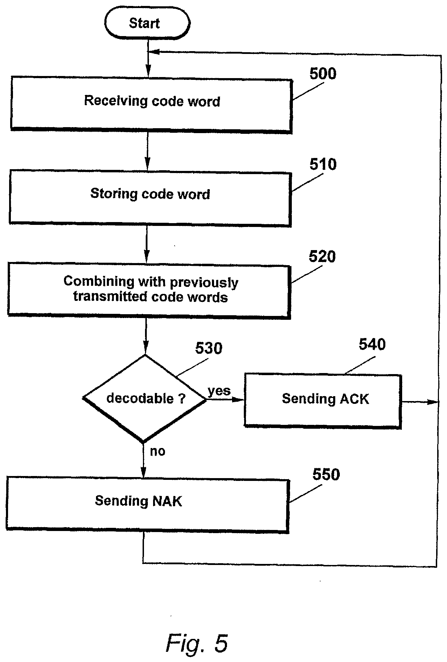

Referring now to FIG. 5, the flow chart illustrates in more detail the process performed by the receiver. In step 500 the receiver receives a code word which is then stored in step 510. When code words have been previously transmitted, the received and stored code word may be combined with a previously transmitted code word of the same data unit, in step 520. It is then decided in step 530 whether the PDU can successfully be decoded. If so, a positive acknowledge message ACK is sent back to the transmitter and all the stored code words of that PDU are released (step 540). Otherwise, a negative acknowledgement message NAK is sent (step 550) to request a retransmission.

Depending on the bits that are retransmitted, three different types of ARQ can be distinguished:

Type I: The erroneous PDU's are discarded and a new copy of the PDU is retransmitted and decoded separately.

There is no combining of earlier and later versions of that PDU.

Type II: The erroneous PDU that needs to be retransmitted is not discarded, but is combined with some incremental redundancy bits provided by the transmitter for subsequent decoding. Retransmitted PDU's sometimes have higher coding rates and are combined at the receiver with the stored values. Thus, only little redundancy is added in each retransmission.

Type III: This ARQ type differs from Type-II ARQ only in that every retransmitted PDU is now self decodable. This implies that the PDU is decodable even without forming the combination with previous PDU's. This is useful if some PDU's are so heavily damaged that almost no information is reusable.

The schemes II and III are more intelligent and show some performance gain because they have the ability to adjust the coding rate to changing radio environments and to reuse redundancy of previously transmitted PDU's. Such Type II/III ARQ schemes are in the following referred to as "incremental redundancy". The separate versions of the PDU's are encoded differently in the physical layer to increase the coding gain for the combining process. These different portions of the overall code will be called code blocks or code words.

As the ARQ schemes II and III put severe requirements on the memory size to store the soft decision values for subsequent combining, it has been proposed to introduce a very fast feedback channel. The feedback channel is used for sending the ACK and NAK information from the receiver to the transmitter. Usually, there is some round trip delay involved until an ACK or a NAK can be sent because this information is gathered in status reports. It has therefore been seen beneficial to send the feedback very fast by the physical layer directly without an involvement of higher layers such as Radio Link Control RLC. If a NAK has been received, the transmitter can send the next code block with a minimum delay. Thus the number of code blocks that have to be stored are kept very small and the overall delay is decreased.

Because of the limited spectrum resources, future mobile communication systems will be adaptive to the radio environment. The transmission parameters such as modulation, data rate, spreading factor, and the number of spreading codes will be based on the current channel conditions.

However, in Frequency Division Duplex FDD systems the transmitter usually have only little knowledge of the channel conditions experienced by the receiver. If there is some traffic from the receiver to the transmitter on the reverse link, measurements on this traffic will not be reliable since they are made on a different frequency. There are also measurements that can be made in the transmitter. One of such measurements e.g. for the node B is the transmitted code power which corresponds to the transmitted power to a certain User Equipment UE 120. Since the transmit power is controlled by UE power control commands, it follows the channel conditions and tries to compensate for channel attenuation such as pathloss and fading. Nevertheless, such transmitter measurements might not be meaningful under certain conditions.

Prior art adaptation techniques are often based on measurement reports that have to be sent from the receiver to the transmitter. Radio Resource Control RRC can configure such kind of measurements that will then be reported from the UE 120 to the Radio Network Controller RNC 210. These measurement reports introduce additional signalling overhead that has to be transmitted over the air. A continuous measurement reporting is therefore disadvantageous for adaptation purposes since it introduces too much interference on the reverse link. On the other side, if reporting is not done continuously there will be a delay at the transmitter so that adaptation cannot be performed accurately according to the present channel conditions.

Another prior art adaptation technique in simple ARQ systems is based on ACK/NAK transmissions which are already available in the transmitter. If a high number of NAK messages are received, the transmitter can for instance reduce the code rate. In systems using incremental redundancy this is however disadvantageous because hybrid ARQ Type II/III inherently involves a high number of retransmissions, i.e. a high number of NAK messages.

While incremental redundancy can already be considered as an adaptive coding scheme there is still a need for further adaptation. In the following one example is given why further adaptation is still needed.

For mobile communication systems which do not use incremental redundancy, the coding rate is usually around 1/2 and 1/3. Type II/III schemes use lower code rates for the first code block. Prior art systems for incremental redundancy are using a fixed coding rate for each code block. For instance, each code block could have a fixed code rate of 1. Assuming no acknowledgement, the overall coding rate (after subsequent combining) will decrease with each retransmission to $r = 1, 1/2, 1/3, 1/4$ and so on.

Thus, compared to Type I ARQ; incremental redundancy schemes have more retransmissions because the redundancy added per code block (with each retransmission) is smaller in Type II/III schemes. For a good adaptation granularity (coding rate to the channel condition) the code rate of a single code block should be high. The number of retransmissions will increase but the overall code rate will be nearer the optimum coding value at this particular moment.

There are several problems that come up with such design criteria:

First of all the number of retransmissions that have to be requested over the feedback channel is large and leads to an increase of the signalling overhead on the feedback channel. Further, the delay until a whole PDU is successfully decoded increases by the round trip delay RTD time with each retransmission. Furthermore, the memory requirements increase with the number of retransmissions that are proportional to the time needed for storing single code blocks. Moreover, if a high code rate is assumed for the first code block, e.g. r = 1, there will be near 100% retransmission in bad channel conditions because this data rate is designed for good channel conditions. On the other hand, if a low code rate is assumed for the first code block, e.g. *r = 1/2,* there will be fewer retransmissions, but the gain will be relatively small compared to hybrid Type I ARQ.

Besides incremental redundancy, there are other known techniques of adaptive coding. However, these prior art adaptive coding schemes do not consider the behaviour of the ARQ Type II/III scheme where the code can be split into multiple code blocks. Since there will be a gain from the time diversity of the multiple code blocks the required coding rate for hybrid ARQ Type I scheme will be different from hybrid ARQ Type II/III schemes.

BAKHTIYARI S ET AL: "PRACTICAL IMPLEMENTATION OF A MOBILE DATA LINK PROTOCOL WITH A TYPE II HYBRID ARQ SCHEME AND CODE COMBINING" PERSONAL COMMUNICATION - FREEDOM THROUGH WIRELESS TECHNOLOGY, SECAUCUS, NJ., MAY 18-20, 1993, PROCEEDINGS OF THE VEHICULAR TECHNOLOGY CONFERENCE, NEW YORK, IEEE, US, pages 774-777, ISBN: 0-7803-1267-8 discloses a mobile data link protocol based on type II hybrid ARQ scheme using convolutional coding and code combining. An adaptive coding scheme is proposed to match the code rate of the header to the channel requirement estimated on the basis of the total number of transmissions for a frame.

"Adaption Techniques in Wireless Packet Data Services", Sanjiv Nanda, Krishna Balachandran, Sarath Kumar, XP-000908338, IEEE Journal, January 2000, discloses that a larger SINR can be used to provide higher data rates by reducing coding or spreading and/or increasing the constellation destiny. Also, the cellular spectral efficiency can be increased by a factor of two or more if users with better links are served at higher data rates.

"Rate-Compatible Punctured Convolutional Codes (RCPC Codes) and their Applications", Joachim Hagenauer, XP-000670428, IEE Journal, April 1988, discloses transmission of incremental redundancy in ARQ/FEC schemes and continuous rate variation to change from low to high error protection with a data frame. It is shown that the same Viterbi decoder can be used for all RCPC codes of the same M by controlling the metric memory access through the puncturing rule, the soft decision and the channel state information (CSI).

In order to overcome the drawbacks of the prior art systems, it is the object of the invention to provide a hybrid ARQ technique allowing for additional measurements in the transmitter without the need of signalling measurement reports on the reverse link, thereby reducing the overhead.

This object is solved by the invention as claimed in the independent claims.

The invention is advantageous in that it provides an adaptive coding scheme with incremental redundancy, making use of information that is already available at the transmitter. Thus, the invention provides a transmitter measurement overcoming the numerous drawbacks of the prior art schemes.

Preferred embodiments are defined in the dependent claims.

As mentioned above incremental redundancy schemes inherently receive ACK/NAK information on the feedback channel. As such, it is not very expressive since a high number of NAK messages have to be received for a good adaptation. In the preferred embodiments, the invention provides a technique to derive the overall code rate that was needed for the acknowledgement of previous PDUs. This information can be derived by summing up the number of retransmissions with the corresponding code rate of the corresponding PDUs. This allows for instance to determine an estimate of the required FEC parameter without the need for any additional measurement reports from the receiver to the transmitter.

Besides the new transmitter measurement, the present invention makes, in one embodiment, use of this measurement for adaptation. Depending on the channel conditions, the number of retransmissions needed for decoding the PDU's will vary. For incremental redundancy the performance gain compared to ARQ Type I is only large if there is a certain portion of NAK messages at the first transmission (e.g. larger than 50%). For good channel conditions a code rate near 1 (i.e. no redundancy) might be appropriate while in very bad situations (e.g. fading, shadowing) even code rates of 1/3 could allow only some packets to be decoded correctly.

The invention further provides an adaptive coding for the code rates of the separate code blocks. Particularly the code rate of the first code block can be tailored to deliver a certain target rate of retransmissions under several channel conditions.

The invention will now be described in more detail with reference to the accompanying drawings in which:

FIG. 1 illustrates the UMTS architecture;

FIG. 2 illustrates the UTRAN architecture;

FIG. 3 is a block diagram illustrating a transmitter capable of FEC encoding the data to be transmitted;

FIG. 4 is a block diagram illustrating a transmitter adapted to the FEC/ARQ scheme;

FIG. 5 is a flowchart illustrating the operation of a receiver working according to the ARQ technique;

FIG. 6 is a block diagram illustrating a transmitter according to a first preferred embodiment of the present invention;

FIG. 7 is a flow chart illustrating the process of operating the transmitter according to FIG. 6;

FIG. 8 is a block diagram illustrating a transmitter according to a second preferred embodiment of the present invention; and

FIG. 9 is a flow chart illustrating the process of operating the transmitter according to FIG. 8.

The invention will now be described in more detail with reference to the accompanying drawings.

The code rate r is the ratio of the number of information bits $k$ to the number of transmitted coded bits $n$. Different code rates and code words can easily be generated using rate compatible punctured codes such as RCPT and RCPC codes. The code words are punctured from a common mother code. The mother code should have a low coding rate to allow several high code rate code words to be generated from it. Either the PDU or the mother code needs to be stored in the transmitter for the case retransmissions are requested and new code words are needed to be sent. While it will be understood by those of ordinary skill in the art that the invention is not limited to the specific embodiments described hereafter, it will now be assumed that the whole mother code (i.e. all code words) is stored in the transmitter for retransmissions. This reduces the complexity for encoding but needs more memory in the transmitter.

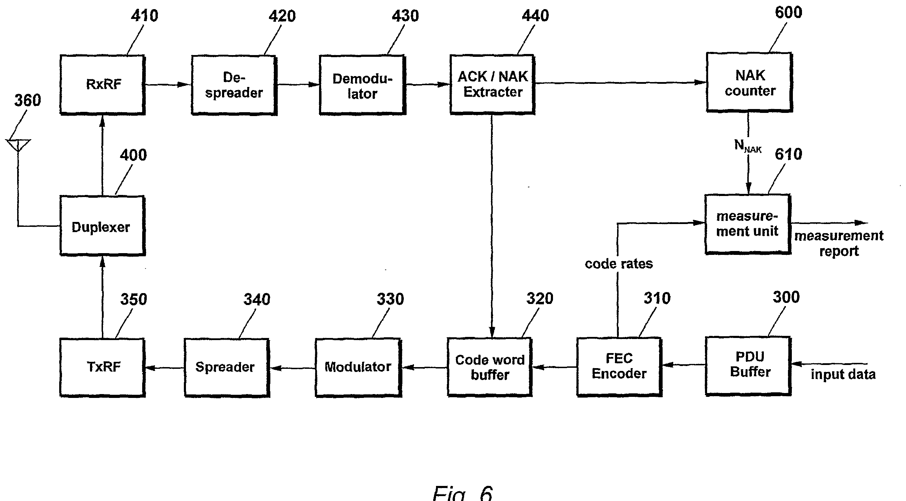

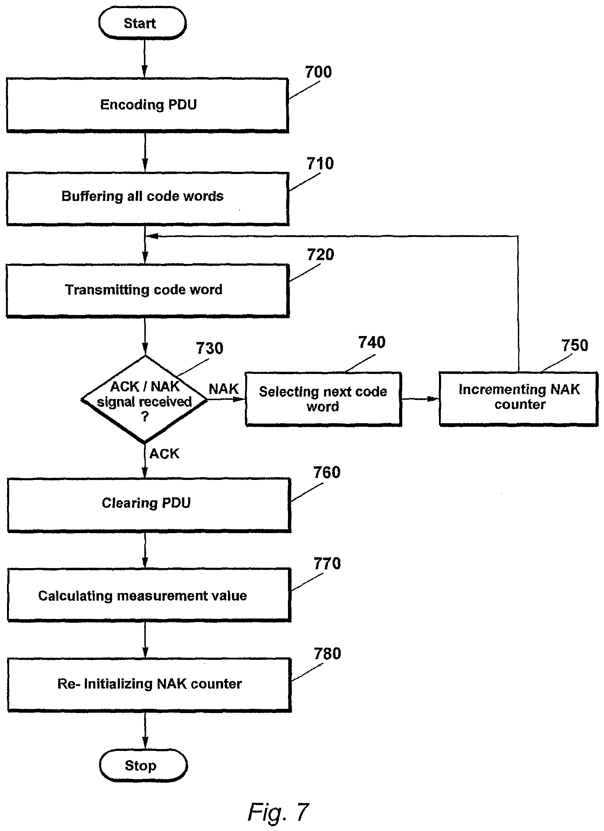

Referring now to FIG. 6 which illustrates a first preferred embodiment of a transmitter according to the present invention, the arrangement differs from that of FIG. 4 in that there is provided a NAK counter 600 and a measurement unit 610. The operation of the transmitter will now be explained in more detail with reference to FIG. 7.

After encoding the PDUs in steps 700 by the FEC encoder 310, the code words are buffered in the code word buffer 320 (step 710). Then, the first code word is transmitted in step 720. If the receiver is not able to decode the data, it will send a NAK message to request the transmitter to send the next new code to add more redundancy to the received data. In this case, the transmitter will receive in step 730 the NAK message and will select the next code word from code word buffer 320 in step 740. This next code word is then queued for transmission. After reception, the receiver will combine the new code word with the already received code word so that the overall code rate in the receiver is $r_{tot} = k / (n_{cw_1} + n_{cw_2})$. Thus, redundancy is added and it is more likely that the packet can be decoded.

If the transmitter receives in step 730 an ACK message, all the code words of the respective PDU can be cleared in step 760.

As shown in the flow chart, the NAK counter 600 is incremented in step 750 whenever a NAK message is received. Thus, the NAK counter 600 will count all NAK messages of a PDU until the PDU has been acknowledged. With the knowledge of the code rates of each code word the number $N_{NAK}$ of retransmission per PDU can be used in the measurement unit 610 to calculate the overall PDU code rate, the average number of retransmissions per PDU or the average number of retransmissions per code word. If the code rates of the code words are fixed the measurement unit 610 will preferably contain a memory for storing the code rates of each code word. As will be described in more detail below, the measurement can be averaged over a number of PDUs or over a certain time. For this purpose, the measurement 610 is preferably provided with a filter function. Averaging is preferably applied depending on the round trip delay until retransmissions can be sent and depending on how fast channel conditions change. In the filter function also a weighting could be applied in unit 610 to give the recent measurement more weight compared to previous measurements.

In the preferred embodiment, the measurement unit 610 reports the measurement value to higher layer units or other entities. Preferably, the measurement value is reported to the base station (Node B) 220 or to the Radio Network Controller RNC 210. Reporting can be done on demand, periodically or based on certain thresholds.

Examples of measurement values which can be calculated in step 770 by the transmitter based on the number of retransmissions without any additional measurements, will now be described in more detail. It will be appreciated that due to the inherent behaviour of hybrid ARQ Type II/III it is possible to derive the overall coding rate that was needed for successfully decoding the PDU's. Any adaptation to the radio environment can be based on such measurement values.

A first example of calculating a measurement value is to calculate the overall coding rate. For this purpose the transmitter counts the number $N_{NAK}$ of retransmissions per PDU and the coding rates $r_{cw_1}$ of each code block if this cannot be derived explicitly. The overall PDU coding rate $r_{tot}$ can now be calculated according to the following equation

$$r_{tot} = \frac{k}{n_{cw_1} + n_{cw_2} + \ldots + n_{cw_{N_{NAK}}}} = \frac{k}{\sum\limits_{i=1}^{N_{NAK}} n_{cw_i}} = \frac{1}{\sum\limits_{i=1}^{N_{NAK}} \frac{1}{r_{cw_i}}}$$

where $n_{cw_1}$ is the number of coded bits of code word $i$. Depending on the accuracy and the time variance of the mobile channel, the code rate can be averaged

$$\overline{r_{tot}} = \frac{1}{N_{PDU}} \cdot \sum\limits_{i=1}^{N_{PDU}} r_{tot_i}$$

where $N_{PDU}$ is the number of packets used for averaging. In a preferred embodiment, the code rate of the first code block is adapted according to the average coding rate that has been used for previously transmitted PDU's.

Another example of calculating a measurement value is to calculate the average number of retransmissions per PDU. For each PDU, the number of retransmissions needed for successfully decoding is $N_{NAK_1}$. The average can then be calculated according to

$$\overline{N_{NAK}} = \frac{1}{N_{PDU}} \cdot \sum\limits_{i=1}^{N_{PDU}} N_{NAK_i}$$

This value is zero when there was no retransmission. In a preferred embodiment, the code rate of the first code block is adapted according to the number of retransmissions needed per PDU. Compared to ARQ Type I adaptive coding schemes the coding will not be adapted to have no retransmissions (i.e. $N_{NAK} = 0$) but will ensure to receive a specified average number of retransmissions. Preferably, the average number is about 1 or even larger.

Yet another example of calculating a measurement value is to calculate the average number of transmissions per code word. The average number of retransmissions (equal to all NAK messages) per code word x averaged over $N_{PDU}$ can be calculated according to

$$\overline{N_{NAKcwx}} = \frac{1}{N_{PDU}} \cdot \sum\limits_{i=1}^{N_{PDU}} N_{NAKcwx_i}$$

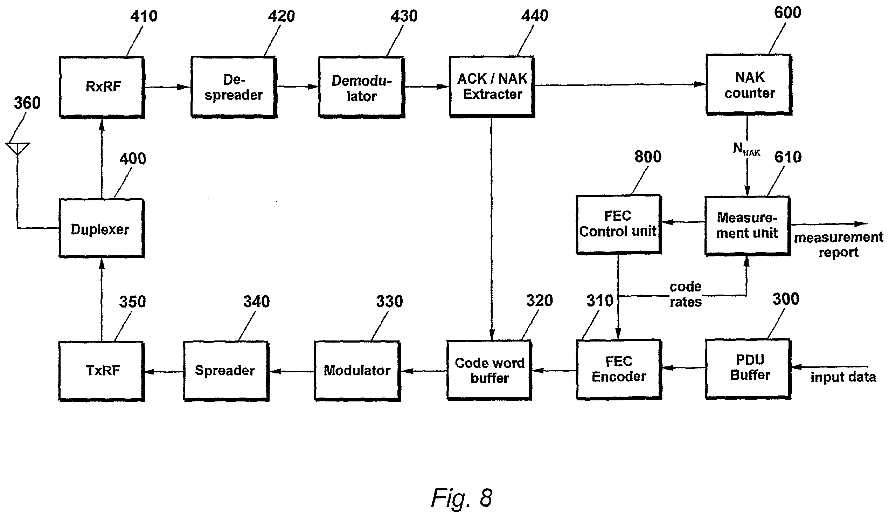

While in the above discussion the transmitter measurement of the present invention has been described in more detail, the following discussion will focus on using this measurement for adaptation purposes. Reference is made in this respect to FIG. 8 which differs from the arrangement of FIG. 6 by showing the FEC control unit 800. The transmitter of FIG. 8 performs adaptation of the FEC parameter used for encoding the data in the FEC encoder 310.

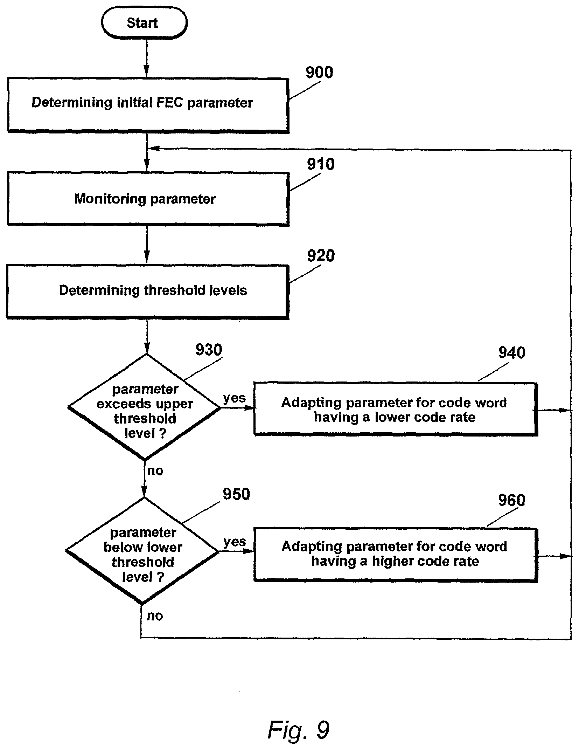

In FIG. 8, the adaptation is carried out by the FEC control unit 800. Based on the measurement provided by the measurement unit 610, the FEC control unit 800 adapts the FEC parameter. Once adaptation is carried out, the new code rates for the code words are reported to the measurement unit 610. The process of performing the adaptation is illustrated in FIG. 9.

The initial FEC values which are determined in step 900, are preferably based on measurements that have been made before transmission. In another preferred embodiment, the initial parameters are set to high code rates. During transmission the FEC parameters will be adapted to the environment. For this purpose, certain parameters used as adaptation criteria have to be monitored. This can for instance be the number of overall retransmissions per PDU, the number of retransmissions per code word, or the overall code rate (see above). It will however be appreciated by those of ordinary skill in the art that the adaptation can also be based on any other parameter measured in the transmitter or received from the receiver.

In the adaptation process depicted in FIG. 9, thresholds are determined in step 920. Some variance can be included to avoid too frequent switching between different FEC parameter sets. The parameter monitored in step 910 is then compared to the threshold in steps 930 and 950. If the monitored parameter such as the average number of retransmission per code word is larger than the threshold, the code rate will be decreased. If on the other hand the monitored parameter is less than the threshold, the code rate will be increased.

In a preferred embodiment, the adaptation process is limited to some or only one of the code words. If only the first code word is adapted the code rate (or FEC parameter) of the following code words can be fixed to a higher coding rate. This ensures a small granularity of the overall code rate and the overall coding rate near the optimum. Alternatively, the code rate of the following code words can be explicitly derived from the coding rate of the first code block. This reduces the signalling overhead because the receiver can derive the coding rates of subsequent code blocks from the coding rates of the first code block.

In another preferred embodiment, the code rates of the code blocks are adapted to allow for decoding only a certain percentage of the PDU's per retransmission correctly. This percentage is preferably 25%.

Referring back to FIG. 8, instead of or in addition to the adaption of encoding parameters, in further preferred embodiments of the invention there will be a transmission parameter adapted. In one preferred embodiment, the modulation form is adapted. For this purpose, the control unit 800 has additional access (not shown in FIG. 8) to modulator 330. In another preferred embodiment, the adapted transmission parameter is the spreading factor or the number of spreading codes. Then, the control unit 800 has additional access (not shown in FIG. 8) to spreader 340.

The examples provided in the rest of the disclosure are to be regarded as merely as related information which might be useful for the reader.

According to an example of the present invention, a hybrid ARQ method of operating a transmitter for transmitting a data unit on a radio channel in a communication system to a receiver, comprising the steps of: encoding the data unit into a sequence of at least two code words using at least one encoding parameter; transmitting a first code word; receiving a positive (ACK) or negative (NAK) acknowledgement message from the receiver indicating that the receiver was or was not able to decode the data unit; and if a negative acknowledgement message was received, transmitting the next code word of the sequence and continuing with the receiving step; characterized in that the method further comprises the step of determining a measurement value indicating the current channel conditions, by counting negative acknowledgement messages and/or evaluating the at least one encoding parameter.

According to a further example, the measurement value is the number of negative acknowledgement messages received until a positive acknowledgement message is received. According to a further example, the measurement value is the overall coding rate determined from the coding rates (row) of each code word which has been transmitted until the positive acknowledgement message is received.

According to a further example, the measurement value is the number of negative acknowledgement messages per code word.

According to a further example, averaging the measurement value over a number of data units or applying a weighted filter function giving less weight to previous data units.

According to a further example, at least one encoding parameter is a FEC code rate.

According to a further example, It further comprises adapting at least one encoding parameter to the measurement value.

According to a further example, It further comprises adapting a transmission parameter to the measurement value.

According to a further example, the transmission parameter is the modulation form.

According to a further example, the transmission parameter is the spreading factor.

According to a further example, the transmission parameter is the number of spreading codes.

According to a further example, the at least one encoding parameter is the code rate of the code words, and the method further comprises the step of initializing (900) the code rates to high values.

According to a further example, the code rates of the code words following the first code word are derived from the code rate of the first code word.

According to a further example, the method comprises the step of signalling only the code rate of the first code word to the receiver.

According to a further example, a hybrid ARC transmitter for transmitting a data unit on a radio channel in a communication system to a receiver, comprising: an encoder for encoding the data unit into a sequence of at least two code words using at least one encoding parameter; a transmission unit for transmitting a first code word; a receiving unit for receiving a positive (ACK) or negative (NAK) acknowledgement message from the receiver indicating that the receiver was or was not able to decode the data unit; and means or operating the transmission unit for transmitting the next code word of the sequence if a negative acknowledgement message was received; characterized by a measurement unit for determining a measurement value indicating the current channel conditions, by counting negative acknowledgement messages and/or evaluating the at least encoding parameter.

According to a further example, the transmitter is a base station.

According to a further example, the transmitter comprises means for sending the measurement value to a radio network controller on demand.

According to a further example, the transmitter comprises means for sending the measurement value to a radio network controller periodically.

According to a further example, the transmitter comprises means for sending the measurement value to a radio network controller event triggered.

**Claims**

1. A hybrid ARQ method for transmitting a protocol data unit PDU on a radio channel, the method comprising:

   encoding (700) the protocol data unit PDU into at least a first code word using a first redundancy parameter;
   encoding (700) said PDU into a second code word using a second redundancy parameter,
   the first redundancy parameter and the second redundancy parameter being coding rates;
   transmitting (720) said first code word;
   receiving (730) at least one positive acknowledgment message, ACK, or a negative acknowledgment message, NACK, indicating that a protocol data unit, PDU, was decoded successfully or not;
   determining (770) a measurement value by counting negative acknowledgement messages;
   adapting said second redundancy parameter for said second code word based on the measurement value
   if a negative acknowledgment message, NACK, was received for the protocol data unit, PDU, transmitting (720, 740) said second code word, with said adapted second redundancy parameter,
   **characterized by**
   adapting the first redundancy parameter based on an average number of received negative acknowledgment messages per PDU over a number of PDUs.

2. The method of claim 1, wherein said measurement value is derived by the evaluation per code word.

3. The method of claim 1 or 2, wherein said measurement value indicates the condition of the radio channel.

4. The method of one of claims 1 to 3, wherein said measurement value is the number of negative acknowledgement messages received until the positive acknowledgement is received.

5. The method of one of claims 1 to 4, wherein said measurement value is the number of negative acknowledgement messages per code word.

6. The method of one of claims 1 to 5, further comprising averaging said measurement value over a number of data units or applying a weighted filter function giving less weight to previous data units.

7. The method of one of claims 1 to 6, further comprising adapting a transmission parameter to said measurement value.

8. The method of claim 7, wherein said transmission parameter is a modulation form.

9. The method of claim 7, wherein said transmission parameter is a spreading factor.

10. The method of claim 7, wherein said transmission parameter is a number of spreading codes.

11. The method of one of claims 1 to 10, wherein said code rates of code words following the first code word are derived from the code rate of the first code word.

12. The method of one of claims 1 to 11, further comprising signalling only the code rate of the first code word to a receiver.

13. The method of one of claims 1 to 12, wherein said first code word is different from said second codeword with respect to redundancy.

14. A hybrid ARQ transmitter for transmitting a protocol data unit, PDU, on a radio channel, comprising:

    an encoder (310) that encodes the protocol data unit, PDU, into at least a first code word using a first redundancy parameter and encodes said PDU into a second code word using a second redundancy parameter,
    the first redundancy parameter and the second redundancy parameter being coding rates;
    a transmission section (330, 340, 350, 360, 370) that transmits said first code word;
    a receiving section (360, 400, 410, 420, 430) that receives at least one positive acknowledgement message, ACK, or negative acknowledgment message, NACK, indicating that the protocol data unit, PDU, was decoded successfully or not;
    a section that determines a measurement value by counting negative acknowledgement messages;
    a section that adapts said second redundancy parameter for said second code word i based on the measurement value, and

an operating section (320, 440) that operates the transmission section to transmit said second code word with said adapted second redundancy parameter if a negative acknowledgment message, NACK, was received for the PDU

**characterized by**

a section that adapts the first redundancy parameter based on an average number of received negative acknowledgment messages per PDU over a number of PDUs.

15. A hybrid ARQ transmitter for performing a hybrid ARQ method for transmitting a data unit on a radio channel according to the method of one of claims 1 to 13.

16. A base station comprising a transmitter according to claim 14 or 15.

17. The base station of claim 16, further comprising a sending section that sends the measurement value to a radio network controller on demand.

18. The base station of claim 16, further comprising a sending section that sends the measurement value to a radio network controller periodically.

19. The base station of claim 16, further comprising a sending section that sends the measurement value to a radio network controller event triggered.

20. A communication system comprising a transmitter according to claim 14 or 15 and a receiver.

**Patentansprüche**

1. Hybrid-ARQ-Verfahren zum Senden einer Protokolldateneinheit PDU auf einem Funkkanal, wobei das Verfahren umfasst:

   Codieren (700) der Protokolldateneinheit PDU in mindestens ein erstes Codewort unter Verwendung eines ersten Redundanzparameters;
   Codieren (700) der PDU in ein zweites Codewort unter Verwendung eines zweiten Redundanzparameters;
   wobei der erste Redundanzparameter und der zweite Redundanzparameter Codierungsraten sind;
   Senden (720) des ersten Codeworts;
   Empfangen (730) von mindestens einer positiven, ACK, Bestätigungsnachricht oder einer negativen, NACK, Bestätigungsnachricht, die anzeigt, dass eine Protokolldateneinheit, PDU, erfolgreich decodiert wurde oder nicht;
   Bestimmen (770) eines Messwerts durch Zählen der negativen Bestätigungsnachrichten;
   Anpassen des zweiten Redundanzparameters für das zweite Codewort, basierend auf dem Messwert, wenn eine negative, NACK, Bestätigungsnachricht für die Protokolldateneinheit, PDU, empfangen wurde, Senden (720, 740) des zweiten Codeworts mit dem angepassten zweiten Redundanzparameter,
   **gekennzeichnet durch**
   Anpassen des ersten Redundanzparameters basierend auf einer durchschnittlichen Anzahl von empfangenen negativen Bestätigungsnachrichten pro PDU über eine Anzahl von PDUs.

2. Verfahren nach Anspruch 1, wobei der Messwert aus der Evaluierung pro Codewort abgeleitet wird.

3. Verfahren nach Anspruch 1 oder 2, wobei der Messwert den Zustand des Funkkanals anzeigt.

4. Verfahren nach einem der Ansprüche 1 bis 3, wobei der Messwert die Anzahl der negativen Bestätigungsnachrichten ist, die empfangen werden, bis die positive Bestätigung empfangen wird.

5. Verfahren nach einem der Ansprüche 1 bis 4, wobei der Messwert die Anzahl der negativen Bestätigungsnachrichten pro Codewort ist.

6. Verfahren nach einem der Ansprüche 1 bis 5, des Weiteren umfassend das Mitteln des Messwerts über eine Anzahl von Dateneinheiten oder das Anwenden einer gewichteten Filterfunktion, die vorhergehenden Dateneinheiten weniger Gewichtung gibt.

7. Verfahren nach einem der Ansprüche 1 bis 6, des Weiteren umfassend das Anpassen eines Sendeparameters an den Messwert.

8. Verfahren nach Anspruch 7, wobei der Sendeparameter eine Modulationsform ist.

9. Verfahren nach Anspruch 7, wobei der Sendeparameter ein Spreizfaktor ist.

10. Verfahren nach Anspruch 7, wobei der Sendeparameter eine Anzahl von Spreizcodes ist.

11. Verfahren nach einem der Ansprüche 1 ist 10, wobei die Coderaten von Codeworten, die dem ersten Codewort folgen, aus der Coderate des ersten Codeworts abgeleitet sind.

12. Verfahren nach einem der Ansprüche 1 bis 11, des Weiteren umfassend das Signalisieren von nur der Coderate des ersten Codeworts an den Empfänger.

13. Verfahren nach einem der Ansprüche 1 bis 12, wobei sich das erste Codewort hinsichtlich der Redundanz von dem zweiten Codeworte unterscheidet.

14. Hybrid-ARQ-Sender zum Senden einer Protokolldateneinheiten, PDU, auf einem Funkkanal, umfassend:

einen Codierer (310), der die Protokolldateneinheit, PDU, zu mindestens einem ersten Codewort unter Verwendung eines ersten Redundanzparameters codiert, und die PDU unter Verwendung eines zweiten Redundanzparameters zu einem zweiten Codewort codiert,
wobei der erste Redundanzparameter und der zweite Redundanzparameter Codierungsraten sind;
einen Sendeabschnitt (330, 340, 350, 360, 370), der das erste Codewort sendet;
einen Empfangsabschnitt (360, 400, 410, 420, 430), der mindestens eine positive, ACK, Bestätigungsnachricht oder eine negative, NACK, Bestätigungsnachricht empfängt, die anzeigt, dass eine Protokolldateneinheit, PDU, erfolgreich decodiert wurde oder nicht;
einen Abschnitt, der einen Messwert durch Zählen der negativen Bestätigungsnachrichten bestimmt;
einen Abschnitt, der den zweiten Redundanzparameter für das zweite Codewort i basierend auf dem Messwert anpasst, und
einen Betätigungsabschnitt (320, 440), der den Sendeabschnitt dazu betätigt, das zweite Codewort mit dem angepassten zweiten Redundanzparameter zu senden, wenn eine negative, NACK, Bestätigungsnachricht von der PDU empfangen wurde,
**gekennzeichnet durch**
eine Abschnitt, der den ersten Redundanzparameter basierend auf einer durchschnittlichen Anzahl von empfangenen negativen Bestätigungsnachrichten pro PDU über eine Anzahl von PDUs anpasst.

15. Hybrid-ARQ-Sender zum Durchführen eines Hybrid-ARQ-Verfahrens zum Senden einer Dateneinheit auf einem Funkkanal gemäß dem Verfahren nach einem der Ansprüche 1 bis 13.

16. Basisstation, umfassend einen Sender nach einem der Ansprüche 14 oder 15.

17. Basisstation nach Anspruch 16, des Weiteren umfassend einen Sendeabschnitt, der den Messwert auf Abfrage an eine Funknetzwerksteuerung sendet.

18. Basisstation nach Anspruch 16, des Weiteren umfassend einen Sendeabschnitt, der den Messwert periodisch an eine Funknetzwerksteuerung sendet.

19. Basisstation nach Anspruch 16, des Weiteren umfassend einen Sendeabschnitt, der den Messwert ausgelöst an eine Funknetzwerksteuerung sendet.

20. Kommunikationssystem, umfassend einen Sender nach einem der Ansprüche 14 oder 15, und einen Empfänger.

**Revendications**

1. Procédé ARQ hybride pour transmettre une unité de donnée de protocole PDU sur un canal radio, le procédé comprenant les étapes consistant à :

   coder (700) l'unité de donnée de protocole PDU en au moins un premier mot code en utilisant un premier paramètre de redondance.
   coder (700) ladite PDU en un second mot code en utilisant un second paramètre de redondance ;
   le premier paramètre de redondance et le second paramètre de redondance étant des débits de codage ;
   transmettre (720) ledit premier mot de code ;
   recevoir (730) au moins un message d'accusé de réception positif, ACK, ou un message d'accusé de réception négatif, NACK, indiquant qu'une unité de donnée de protocole, PDU, a été décodée avec succès ou non ;
   déterminer (770) une valeur de mesure en comptant des messages d'accusé de réception négatif ;
   adapter ledit second paramètre de redondance pour ledit second mot code en fonction de la valeur de mesure ;
   si un message d'accusé de réception négatif, NACK, a été reçu pour l'unité de donnée de protocole, PDU, transmettre (720, 740) ledit second mot code, avec ledit second paramètre de redondance adapté,
   **caractérisé par** l'étape consistant à
   adapter le premier paramètre de redondance sur la base d'un nombre moyen de messages d'accusé de réception négatif reçu par PDU sur un nombre de PDU.

2. Procédé selon la revendication 1, dans lequel ladite valeur de mesure est déduite par l'évaluation par mot code.

3. Procédé selon la revendication 1 ou 2, dans lequel ladite valeur de mesure indique l'état du canal radio.

4. Procédé selon l'une des revendications 1 à 3, dans lequel ladite valeur de mesure est le nombre de messages d'accusé de réception négatif reçu jusqu'à ce que l'accusé de réception positif soit reçu.

5. Procédé selon l'une des revendications 1 à 4, dans lequel ladite valeur de mesure est le nombre de messages d'accusé de réception négatif par mot code.

6. Procédé selon l'une des revendications 1 à 5, comprenant en outre la réalisation de la moyenne de ladite valeur de mesure sur un certain nombre d'unités de donnée, ou l'application d'une fonction de filtre pondéré donnant moins de poids aux unités de donnée précédentes.

7. Procédé selon l'une des revendications 1 à 6, comprenant en outre l'adaptation d'un paramètre de transmission à ladite valeur de mesure.

8. Procédé selon la revendication 7, dans lequel ledit paramètre de transmission est une forme de modulation.

9. Procédé selon la revendication 7, dans lequel ledit paramètre de transmission est un facteur d'étalement.

10. Procédé selon la revendication 7, dans lequel ledit paramètre de transmission est un nombre de codes d'étalement.

11. Procédé selon l'une des revendications 1 à 10, dans lequel lesdits taux de code des mots codes à la suite du premier mot code sont déduits du taux de code du premier mot code.

12. Procédé selon l'une des revendications 1 à 11, comprenant en outre la signalisation uniquement du taux de code du premier mot code à un récepteur.

13. Procédé selon l'une des revendications 1 à 12, dans lequel ledit premier mot code est différent dudit second mot code en ce qui concerne la redondance.

14. Transmetteur hybride ARQ pour transmettre une unité de donnée de protocole, PDU, sur un canal radio, comprenant :

   un codeur (310) qui code l'unité de donnée de protocole, PDU, en au moins un premier mot code en utilisant un premier paramètre de redondance et code ladite unité PDU en un second mot code en utilisant un second paramètre de redondance,
   le premier paramètre de redondance et le second paramètre de redondance étant des débits de codage ;

une section de transmission (330, 340, 350, 360, 370) qui transmet ledit premier mot code ;

une section de réception (360, 400, 410, 420, 430) qui reçoit au moins un message d'accusé de réception positif, ACK, ou un message d'accusé de réception négatif, NACK, indiquant que l'unité de donnée de protocole, PDU, a été décodée avec succès ou non ;

une section qui détermine une valeur de mesure en comptant des messages d'accusé de réception négatif ;

une section qui adapte ledit second paramètre de redondance pour ledit second mot code en fonction de la valeur de mesure, et

une section d'actionnement (320, 440) qui actionne la section de transmission pour transmettre ledit second mot code avec ledit second paramètre de redondance adapté si un message d'accusé de réception négatif, NACK, a été reçu pour la PDU **caractérisé par**

une section qui adapte le premier paramètre de redondance sur la base d'un nombre moyen de messages d'accusé de réception négatif reçu par PDU sur un nombre de PDU.

15. Transmetteur hybride ARQ pour exécuter un procédé ARQ hybride pour transmettre une unité de donnée sur un canal radio selon le procédé de l'une des revendications 1 à 13.

16. Station de base comprenant un transmetteur selon la revendication 14 ou 15.

17. Station de base selon la revendication 16, comprenant en outre une section d'envoi qui envoie la valeur de mesure à une commande de réseau radio à la demande.

18. Station de base selon la revendication 16, comprenant en outre une section d'envoi qui envoie la valeur de mesure à une commande de réseau radio périodiquement.

19. Station de base selon la revendication 16, comprenant en outre une section d'envoi qui envoie la valeur de mesure à une commande de réseau radio suite à un événement.

20. Système de communication comprenant un transmetteur selon la revendication 14 à 15, et un récepteur.

Fig. 1

*Fig. 2*

*Fig. 3*

EP 2 424 152 B1

*Fig. 4*

EP 2 424 152 B1

*Fig. 5*

Fig 6

EP 2 424 152 B1

```
        ┌─────────┐
        │  Start  │
        └────┬────┘
             │
             ▼                              700
   ┌──────────────────────┐
   │    Encoding PDU      │
   └──────────┬───────────┘
              │
              ▼                             710
   ┌──────────────────────┐
   │  Buffering all code words  │
   └──────────┬───────────┘
              │
              ▼                             720
   ┌──────────────────────┐
   │  Transmitting code word  │
   └──────────┬───────────┘
              │
              ▼       730
           ◇ ACK / NAK ◇  NAK   ┌──────────────┐    ┌──────────────┐
           │ signal received │──────▶│ Selecting next │──▶│ Incrementing NAK │
           ◇       ?        ◇       │   code word    │    │    counter      │
              │ ACK                  └──────────────┘    └──────────────┘
              ▼                             760
   ┌──────────────────────┐
   │    Clearing PDU      │
   └──────────┬───────────┘
              │
              ▼                             770
   ┌──────────────────────┐
   │ Calculating measurement value │
   └──────────┬───────────┘
              │
              ▼                             780
   ┌──────────────────────┐
   │  Re- Initializing NAK counter │
   └──────────┬───────────┘
              │
              ▼
        ┌─────────┐
        │  Stop   │
        └─────────┘
```

*Fig. 7*

*Fig. 8*

EP 2 424 152 B1

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- PRACTICAL IMPLEMENTATION OF A MOBILE DATA LINK PROTOCOL WITH A TYPE II HYBRID ARQ SCHEME AND CODE COMBINING. **BAKHTIYARI S et al.** PERSONAL COMMUNICATION - FREEDOM THROUGH WIRELESS TECHNOLOGY, SECAUCUS, NJ., MAY 18-20, 1993, PROCEEDINGS OF THE VEHICULAR TECHNOLOGY CONFERENCE. IEEE, 18 May 1993, 774-777

- **SANJIV NANDA ; KRISHNA BALACHANDRAN ; SARATH KUMAR.** Adaption Techniques in Wireless Packet Data Services. *IEEE Journal,* January 2000
- **JOACHIM HAGENAUER.** Rate-Compatible Punctured Convolutional Codes (RCPC Codes) and their Applications. *IEE Journal,* April 1988